# EUROPÄISCHE PATENTSCHRIFT

(11) **EP 3 320 230 B1**
(45) Veröffentlichungstag und Bekanntmachung des Hinweises auf die Patenterteilung: **19.02.2020**
(21) Anmeldenummer: 16745042.8
(22) Anmeldetag: 01.07.2016
(51) Int. Cl.: F16H 7/12

(54) **PENDELSPANNER MIT EINSTELLBAREM AXIALSPIEL UND RIEMENANTRIEB**
PENDULUM TENSIONER HAVING ADJUSTABLE AXIAL PLAY AND BELT DRIVE
TENDEUR OSCILLANT À JEU AXIAL ET ENTRAÎNEMENT PAR COURROIE

(30) Priorität: 10.07.2015 DE 102015212927
(43) Veröffentlichungstag der Anmeldung: 16.05.2018
(73) Patentinhaber: Schaeffler Technologies AG & Co. KG, 91074 Herzogenaurach (DE)
(72) Erfinder: REUSCHEL, Sascha, 91217 Hersbruck (DE); FISCHER, Luc, 67440 Reinhardsmunster (FR); LEOBOLD, Thierry, 67360 Woerth (FR); MOTZ, Thomas, 91074 Herzogenaurach (DE); MEISBORN, Marco, 91315 Höchstadt a.d. Aisch (DE); KAMM, Robert, 90768 Fürth (DE)
(86) Internationale Anmeldenummer: PCT/DE2016/200302
(87) Internationale Veröffentlichungsnummer: WO 2017/008798

(56) Entgegenhaltungen:
- EP-B1- 2 128 489
- EP-B1- 2 557 295
- DE-A1-102012 209 028

## Beschreibung

Die Erfindung betrifft einen Pendelspanner für einen Nebenaggregate-Zugmitteltrieb einer Brennkraftmaschine, der zum zumindest teilweisen Umgeben einer Generatorwelle ausgelegt ist und Befestigungsbereiche an zwei zueinander drehbeweglich angeordneten Spannarmen für zwei Spannrollen aufweist, mittels derer ein Zugmittel, wie ein Riemen, des Nebenaggregate-Zugmitteltriebs spannbar ist, mit einer Lagerhülse zum Anbringen an einem Generatorgehäuse, wobei die Lagerhülse zusammen mit einer an sie angrenzenden und vorzugsweise über einen Pressverband verbundenen Verschlusshülse einen Gleitkanal etwa für ein spannarmfestes Bauteil oder einen Spannarmabschnitt ausformt, wobei die Verschlusshülse eine sich in Radialrichtung erstreckende Verschlusswand aufweist, die eine axiale Begrenzung des Gleitkanals definiert, wobei innerhalb des Gleitkanals mindestens einer der Spannarme drehbar, vorzugsweise radial und axial spielbehaftet, eingreift.

Benachbarter Stand der Technik ist aus der europäischen Patentschrift EP 2 128 489 B1 bekannt, die eine Riemenspannvorrichtung für Starter-Generatoranwendungen betrifft. In dieser Schrift ist eine Riemenspannvorrichtung für einen Riementrieb offenbart, der eine Antriebsmaschine mit einer Antriebsriemenscheibe, die um eine Antriebsachse antreibbar ist, und mehrere weitere Riemenscheiben aufweist.

Die europäische Patentschrift EP 2 557 295 B1 offenbart eine Spannvorrichtung für einen Riementrieb und eine Elektromaschine mit einer derartigen Spannvorrichtung. Der Riementrieb weist einen endlos umlaufenden Riemen, die Elektromaschine mit einem Maschinengehäuse und ein Antriebsrad und zumindest ein weiteres Triebrad auf, das über den Riemen mit dem Antriebsrad in Antriebsverbindung steht.

Das deutsche Gebrauchsmuster DE 85 27 499 U1 betrifft eine Vorrichtung zur Einstellung des Axialspiels zwischen dem Rotor und dem Stator eines Elektromotors. So ist es die Aufgabe der darin offenbarten Vorrichtung, eine Anordnung zu präsentieren, die eine besonders einfache und mit geringem Aufwand verbundene Einstellung des Axialspiels ermöglicht.

Somit sind aus dem Stand der Technik schon verschiedene Pendelspanner in verschiedenen Ausführungsformen bekannt. Auch ist eine Vorrichtung bekannt, die ein möglichst einfach einstellbares Axialspiel nach sich zieht.

Bisher war es üblich, die Einstellung eines Spiels, vorzugsweise Axialspiels, bei Bauteilen über die Addition des Spiels der entsprechenden Einzelkomponenten vorzunehmen. Man spricht hier von einer Zupaarung. Diese Zupaarung von für das Axialspiel relevanten Bauteilen erfordert zum einen die Fertigung mehrerer Einzelteile nach entsprechendem Maß und zum anderen sollte wenigstens eine der betreffenden Komponenten als Ausgleichselement dienen. Bei einer spanenden Fertigung sind hierfür verschiedene Einstellmaße notwendig. In einer spanlosen Fertigung ist sogar der Einsatz von verschiedenen Werkzeugen notwendig.

Weiterhin ist es bei den aus dem Stand der Technik bekannten Vorrichtungen so, dass während der Montage zur Einstellung des Axialspiels die relevanten Bauteile im Verbund gemessen werden müssen, und zu jedem Ist-Maß ist die passende und hochgenaue Einstellkomponente zuzuordnen. Diese Einstellung des Axialspiels durch eine Zupaarung erfordert demnach erhöhte Fertigungs- und/oder Werkzeugkosten, erhöhte Lagerkosten, die aus dem Vorhalten und der Trennung der benötigten Ausgleichselemente resultieren, sowie erhöhte Montagekosten durch die Ist-Maß-Messung und durch die Sicherstellung der Vermeidung von Fehlpaarungen. Weiterhin resultiert aus einer variierenden Genauigkeit, bzw. aus der Abstufung der Ausgleichselemente eine gewisse Streuung im Axialspiel nach der Montage.

Die Nachteile des in diesen Druckschriften offenbarten Stands der Technik liegen darin, dass bei der Fertigung und der Montage eines Pendelspanners / einer Spannvorrichtung hochgenaue Fertigungstoleranzen erfüllt werden müssen, um ein in der Summe gewünschtes Axialspiel zu erhalten. Die Möglichkeiten, die im Stand der Technik präsentiert sind, um ein Axialspiel einzustellen, eignen sich keinesfalls, um sie auf das Anwendungsgebiet der Pendelspanner zu übertragen. Demnach ist keine Lösung bekannt, die eine wirtschaftliche und zugleich hochpräzise Einstellung des Axialspiels eines Pendelspanners offenbart.

Es ist somit die Aufgabe der vorliegenden Erfindung, die Nachteile aus dem Stand der Technik zu beheben und insbesondere einen Pendelspanner zu offenbaren, der nicht mehr die höchsten Anforderungen an Fertigungstoleranzen erfüllen muss, um dennoch ein sich aus mehreren Toleranzmaßen zusammenaddierendes, präzises Axialspiel zu erhalten und langlebig exakt zu funktionieren.

Dies wird erfindungsgemäß dadurch gelöst, dass das Axialspiel durch einen axialen Hülsenspalt zwischen der Verschlusshülse und der Lagerhülse eingestellt ist, wobei der Hülsenspalt größer oder gleich dem Axialspiel ist.

Das Axialspiel ist durch den axialen Hülsenabstand zwischen der Verschlusshülse und der Lagerhülse eingestellt, wobei der Hülsenabstand größer oder im Grenzfall gleich dem Axialspiel ist. Diese Anordnung ermöglicht es, das Axialspiel durch eine Relativbewegung in axialer Richtung der Verschlusshülse und/oder der Lagerhülse einzustellen. Somit können verschiedene Einstellmaße, die bei einer spanenden Fertigung der einzelnen Komponenten des Pendelspanners resultierten, oder gar verschiedene Werkzeuge, die eine spanlose Fertigung nach sich zögen, vermieden werden. Dies senkt die Komplexität der Montage, erhöht die Wirtschaftlichkeit in der Fertigung und senkt den zeitlichen Aufwand, der für eine betriebsfertige Zusammensetzung der Komponenten notwendig ist.

Vorteilhafte Ausführungsformen sind in den Unteransprüchen beansprucht und werden nachfolgend näher erläutert.

So ist es vorteilhaft, wenn ein Pressverband zwischen der Lagerhülse und der Verschlusshülse über eine sich in Axialrichtung erstreckende Kontaktfläche realisiert ist. Daraus, dass sich diese Kontaktfläche zwischen der Verschlusshülse und der Lagerhülse ausreichend lange / weit in Axialrichtung erstreckt, resultiert, dass der Pressverband die hohen Anforderungen, die an ihn hinsichtlich der Festigkeit und der Kraftübertragung gestellt sind, erfüllt. Auch zieht jene Erstreckung in axialer Richtung den Vorteil nach sich, dass der Pendelspanner hinsichtlich eines radial benötigten Bauraums sehr kompakt ist.

Wenn das Axialspiel über eine axiale Bewegung der Lagerhülse und/oder der Verschlusshülse variierbar / einstellbar ist, bewirkt dies, dass zum einen aus Fertigungstoleranzen resultierende Fehlpaarungen vermieden werden können, und zum anderen, dass das Axialspiel höchst genau ohne nennenswerten Aufwand einstellbar ist. Weiterhin ermöglicht es jene Anordnung, die axial verlaufenden Abschnitte der Verschlusshülse und/oder der Lagerhülse hinsichtlich ihres Materials und ihrer Oberflächenbeschaffenheit optimal auf die Anforderungen auszulegen, die an dem Pressverband wirken. Weiterhin können jene Flächen derart gestaltet werden, dass sie eine mit geringem Aufwand verbundene Einstellung des Axialspiels nach sich ziehen.

Ein weiteres vorteilhaftes Ausführungsbeispiel besteht drin, dass der Pressverband derart ausgestaltet ist, dass die Verschlusshülse radial innerhalb der Lagerhülse angeordnet ist oder die Verschlusshülse radial außerhalb der Lagerhülse angeordnet ist. Somit sind zwei Ausführungsformen hinsichtlich der radialen Anordnung der Verschluss- und der Lagerhülse möglich, die beide den Anforderungen genügen, einen zuverlässigen Pressverband bereit zu stellen. Neben der hohen Zuverlässigkeit, zieht dies den Vorteil einer erhöhten Flexibilität nach sich. So ist die erfindungsgemäße Vorrichtung nicht nur auf eine Anordnung beschränkt, sondern ermöglicht es je nach Anwendungsfall, eine entsprechende Anordnung der Verschluss- und der Lagerhülse vorzunehmen.

Sobald innerhalb des Gleitkanals eine aus zwei Lagerbauteilen, etwa Lagerringen, zusammengesetzte Lagerung angeordnet ist, die dazu vorbereitet ist, eine relative Rotationsbewegung zwischen einem der Spannarme und dem Gleitkanal zu ermöglichen, so dass der Spannarm drehbeweglich gelagert ist, zieht dies weitere positive Aspekte nach sich. Dadurch, dass die Lagerung des Spannarms, die dessen reibungsarme Relativbewegung ermöglicht, im von der Verschlusshülse und der Lagerhülse ausgebildeten Gleitkanal angeordnet ist, wird die Kompaktheit der erfindungsgemäßen Vorrichtung erhöht und somit der benötigte Bauraum des erfindungsgemäßen Pendelspanners möglichst gering gehalten. Weiterhin wirkt sich die in Umfangsrichtung verteilt wirkende Kraft, die aus der Lagerung des Spannarms resultiert, nicht negativ auf den Pressverband zwischen der Verschlusshülse und der Lagerhülse aus. Vielmehr trägt jene im Gleitkanal ausgebildete Lagerung dazu bei, dass evtl. auftretende Verspannungen in Umfangsrichtung verteilt werden. Daraus folgen dynamische Vorteile des erfindungsgemäßen Pendelspanners.

Ein weiteres vorteilhaftes Ausführungsbeispiel zeichnet sich dadurch aus, dass das eine Lager als Axiallager und das andere Lager als kombiniertes Axial- und Radiallager ausgebildet ist. Diese Kombination ermöglicht es, Kräfte sowohl in Axialrichtung als auch in Radialrichtung aufzunehmen und zu kompensieren. Da an jener Lagerung hohe Axialkräfte wirken, realisieren beide Lagerbauteile eine Axiallagerung. Dies erhöht die Betriebsruhe des erfindungsgemäßen Pendelspanners und senkt die darin auftretenden Reibungen.

Eine weitere vorteilhafte Ausführungsform ist dadurch realisiert, dass das Axiallager und / oder das Axial- und Radiallager als Gleitlager ausgestaltet sind / ist. Sie ziehen durch eine entsprechend gewählte, reibungsarme Materialpaarung und / oder durch eine Schmierung einen minimalen Widerstand der sich relativ bewegenden Komponenten nach sich. Weiterhin sind die Gleitlager dazu in der Lage, zum einen Bauraumvorteile und zum anderen Kostenvorteile gegenüber Wälzlagern zu realisieren. Auch ermöglichen es die Gleitlager, dass der erfindungsgemäße Pendelspanner vor einem wirtschaftlichen Hintergrund den höchsten Anforderungen genügt.

Eine weitere vorteilhafte Ausführungsform ist dadurch gekennzeichnet, dass die Lagerhülse unmittelbar / direkt, etwa über einem Flanschabschnitt, oder über einen separaten Verbindungsflansch mit dem Generatorgehäuse verbunden ist. Dies zieht eine einfach zu realisierende Anbindung des erfindungsgemäßen Pendelspanners in eine Antriebseinheit nach sich. Weiterhin ermöglicht es jene Anbindung, dass der erfindungsgemäße Pendelspanner ohne Mehraufwand in vorhandene Systeme integrierbar ist. Somit ist die Umsetzung der erfindungsgemäßen Vorrichtung nicht mit hohen Investitionskosten für die gesamte Antriebseinheit verbunden.

Wenn die Lagerhülse mehrere asymmetrisch angeordnete Befestigungsabschnitte aufweist, die dafür geeignet / vorbereitet sind, den Pendelspanner mit einem Generator und / oder einem Generatorgehäuse zu verbinden, bewirkt dies, dass die Befestigungsabschnitte gemäß dem im Betrieb vorhandenen Bauraum anordnenbar sind. So ist die Form der Lagerhülse nicht fest vorgegeben, was es ermöglicht, dass der Pendelspanner in verschiedene Anordnungen integrierbar ist, da der Befestigungsabschnitt der Lagerhülse stets an wechselnde Bedingungen anpassbar ist.

Weiterhin betrifft die erfindungsgemäße Vorrichtung einen Riemenantrieb eines Kraftfahrzeugs, mit einem Generator, der ein Generatorgehäuse aufweist, innerhalb dessen eine Generatorwelle drehbar angeordnet ist, sowie mit einem mit der Generatorwelle drehmomentübertragend verbundenen Riemen, wobei der Riemenantrieb einen erfindungsgemäßen Pendelspanner aufweist.

Mit anderen Worten offenbart die erfindungsgemäße Vorrichtung ein Konstruktions- / Montagekonzept eines Zwei-Hülsen-Pressverbands zur Einstellung des Axialspiels. Die erfindungsgemäße Vorrichtung bezieht sich auf Pendelspanner / Entkopplungsspanner, die in Nebenaggregate-Zugmitteltrieben vorgesehen sind und generell aber auch bei anderen Spannarten einsetzbar sind, die entsprechende Anforderungen an das Axialspiel stellen.

Das vorgestellte erfindungsgemäße Konzept des Zwei-Hülsen-Pressverbands zwischen der Lager- und der Verschlusshülse verringert den Aufwand gegenüber der Einstellung des Axialspiels durch die Zupaarung enorm. So müssen weder verschiedene Einstellkomponenten gefertigt, vorgehalten und gelagert werden, noch muss der Montageprozess durch die Ist-Maß-Messung und die entsprechende Zupaarung verlangsamt und / oder verteuert werden. Weiterhin liegt die Streuung des gewünschten Axialspiels der im Rahmen dieser Anmeldung offenbarten Vorrichtung im Rahmen der Genauigkeit einer Presse, die die Einstellung vornimmt. Bei einer solchen Presse sind Verfahrwege im Mikrometerbereich möglich, worauf die Streuung des Axialspiels deutlich geringer ist als bei vertretbarem Fertigungs- und Lageraufwand der Vorrichtungen aus dem Stand der Technik.

Weiterhin können die Einzelkomponenten der erfindungsgemäßen Vorrichtung mit einer hohen Toleranz gefertigt werden, wodurch sie in der Fertigung wirtschaftlicher sind. Dies wird dadurch ermöglicht, dass die Toleranzen aller betroffenen Komponenten bei der Montage vollständig eliminiert werden. Die Axialspielstreuung verschiedener montierter Pendelspanner ist dadurch minimal. Die Begründung hierfür liegt darin, dass das Axialspiel bei dem erfindungsgemäßen Zwei-Hülsen-Pressverband ein reines Einstellmaß an einem Montagewerkzeug ist und sich nicht aus einer Toleranzkette ergibt. Dies wirkt Problemen, die im Betrieb auftreten können, wie bspw. ein Klemmen am Motor, vor. Weiterhin ermöglicht die erfindungsgemäße Vorrichtung, dass auf Kundenanforderungen schnell und einfach reagiert werden kann. So ist es möglich, chargenbezogene Änderungen einfach umzusetzen, ohne von einer Gleichteilstrategie abweichen zu müssen.

So kann in anderen Worten gesagt werden, dass die Erfindung ein bestimmtes Spiel, meist Axialspiel, des Pendelspanners ermöglicht, ohne den Messaufwand in der Montage zu erhöhen, und gleichzeitig das Vorhandensein höherer Toleranzen und geringer Streuungen zulässt. Dies wird mittels zweier Stahl- und/oder Aluminiumhülsen mit möglicherweise einem Flansch, nämlich einer Lagerhülse und einer Verschlusshülse, realisiert. Die Lagerhülse und die Verschlusshülse sind durch einen Pressverband und/oder einen zusätzlichen Formschluss verbunden.

Das Axialspiel wird während der Montage des Pendelspanners durch das Pressen der beiden Hülsen und der zwischen ihnen im Gleitkanal angeordneten Bauteile bis zum Anschlag, also soweit, dass das Axialspiel null beträgt, man spricht in so einem Fall von Pressen "auf Block", und anschließendes Zurückdrücken einer der beiden Hülsen um den Betrag des gewünschten Axialspiels eingestellt.

Da sich das Axialspiel direkt auf eine Verkippung des Pendelspanners auswirkt, die vor allem an den Pendelrollen sehr eng toleriert ist, ist eine exakte Einstellung des Axialspiels mit niedriger Toleranz sowie niedriger Streuung unter den montierten Pendelspannern aus Funktionsgründen von höchster Wichtigkeit.

Das eingestellte Axialspiel nimmt in der Regel Werte zwischen 0,1 mm und 0,3 mm, vorzugsweise 0,2 mm, an. Durch die erfindungsgemäße Vorrichtung kann der Einsatz von Ausgleichsscheiben, die eben jenes Axialspiel nach sich ziehen sollen, vermieden werden.

Bei der Lagerhülse und der Verschlusshülse handelt es sich vorzugsweise um dünnwandige und beschichtete Blechteile. Durch die Beschichtung können Slip-Stick-Effekte verringert oder verhindert werden, die ansonsten beim Auseinanderfahren der beiden Hülsen aus der zusammen gepressten Blockstellung zu einer übermäßigen Ungenauigkeit des dabei einzustellenden Axialspiels führen würden. Der daraus resultierende Pressverband ist zudem so ausgestaltet, dass er die hohen Anforderungen erfüllt, die an seine Dauerfestigkeit gestellt sind.

Bevor die Lagerhülse und die Verschlusshülse den Pressverband eingehen, wird die Verschlusshülse seitlich / von radialer Seite in die restlichen Komponenten des Pendelspanners eingefügt, bevor sie axial gesenkt wird. Jenes Verfahren zur Montage der beiden Hülsen ist deshalb notwendig, da ein Deckel des Spannarms solche Befestigungsabschnitte aufweist, dass eine rein axiale Montage nicht möglich ist. D.h., dass nur die Verschlusshülse seitlich eingeschoben wird, und zwar bevor die Lagerhülse und die Verschlusshülse zusammen gepresst werden.

Die Erfindung wird nachfolgend mittels Figuren näher erläutert. Es zeigen:
- Fig. 1: eine perspektivische Ansicht eines erfindungsgemäßen Pendelspanners im Längsschnitt;
- Fig. 2: eine schematische Detailansicht des erfindungsgemäßen Pressverbands;
- Fig. 3: eine perspektivische Ansicht des erfindungsgemäßen Pendelspanners mit einem Deckel;
- Fig. 4: eine perspektivische Ansicht des erfindungsgemäßen Pendelspanners ohne den Deckel;
- Fig. 5: eine perspektivische Ansicht des erfindungsgemäßen Pendelspanners von einer zur Fig. 4 entgegengesetzten Richtung;
- Fig. 6: eine perspektivische Ansicht einer erfindungsgemäßen Lagerhülse;
- Fig. 7: eine perspektivische Ansicht einer erfindungsgemäßen Verschlusshülse;
- Fig. 8: eine perspektivische Ansicht eines Teilquerschnitts, der die Verschlusshülse, die Lagerhülse, sowie eine Lagerung darstellt;
- Fig. 9:: eine perspektivische Ansicht des erfindungsgemäßen Spannarms;
- Fig. 10: eine perspektivische Ansicht des erfindungsgemäßen Deckels;
- Fig. 11: einen Längsschnitt durch eine weitere Ausführungsform eines erfindungsgemäßen Pressverbands;
- Fig. 12: einen Längsschnitt durch noch ein weiteres Ausführungsbeispiel, das sich von dem aus Figur 11 durch einen Formschluss zwischen der Lagerhülse und der Verschlusshülse unterscheidet; und
- Fig. 13: einen Längsschnitt durch ein weiteres Ausführungsbeispiel.

Die Figuren sind zum Teil lediglich schematischer Natur und dienen ausschließlich dem Verständnis der Erfindung. Die gleichen Elemente sind mit denselben Bezugszeichen versehen. Die Merkmale der einzelnen Ausführungsbeispiele können untereinander ausgetauscht werden.

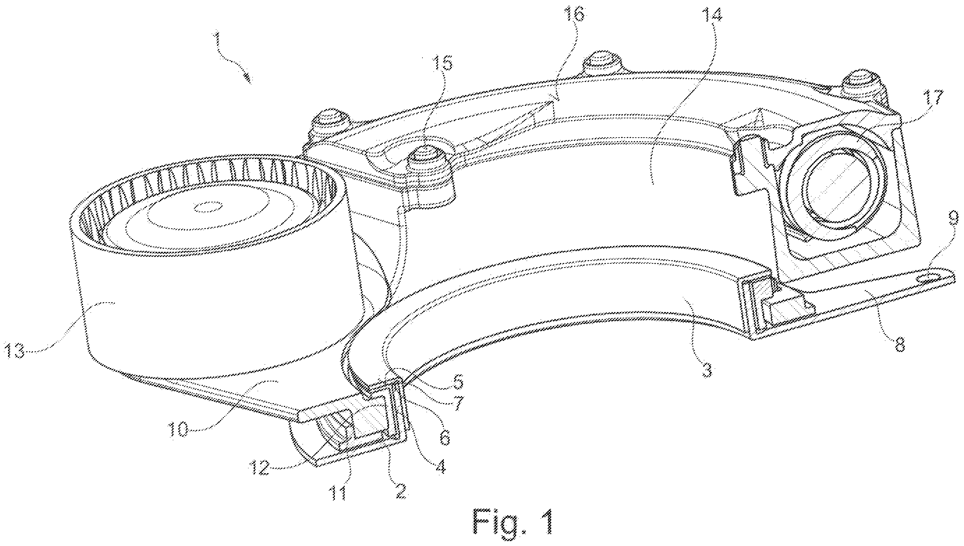

In Fig. 1 ist eine perspektivische Ansicht eines Pendelspanners 1 eines Nebenaggregate-Riementriebs einer Brennkraftmaschine bzw. einer Verbrennungskraftmaschine dargestellt. Der Pendelspanner 1 ist auf einem nicht dargestellten Startergenerator montiert und um eine Generatorwelle drehbar gelagert. Der Pendelspanner 1 weist zwecks der Lagerung eine Lagerhülse 2 und eine Verschlusshülse 3 auf, die mittels eines Pressverbands gefügt sind. Im vorliegenden Ausführungsbeispiel ist die Verschlusshülse 3 radial innerhalb der Lagerhülse 2 eingepresst.

Zusammen definieren die Lagerhülse 2 und die Verschlusshülse 3 einen nach radial außen zeigenden Gleitkanal 4. Die Verschlusshülse 3 weist eine in radialer Richtung verlaufende, dem Gleitkanal 4 zugewandte Verschlusswand 5 auf, die während der Montage eine Montageanlagefläche 32 für ein Axial- und Radiallager 12 darstellt.

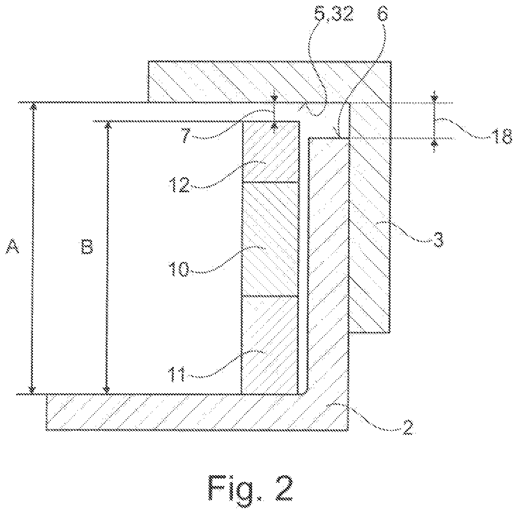

Fig. 2 stellt schematisch die Komponenten im Gleitkanal 4 dar. Das Axialspiel 7 eines Spannarms 10 im Gleitkanal 4 ist die Maßdifferenz "A - B". Dabei ist "A" die Höhe des Gleitkanals 4 und "B" die Gesamtdicke von drei Bauteilen, nämlich einem Spannarm 10, einem Axiallager 11 und dem Axial-/Radiallager 12. Sowohl die Höhe als auch die Dicke werden in derselben Richtung gemessen, nämlich parallel zur Längsachse der Vorrichtung bzw. parallel zu einer Rotationsachse, um die der Spannarm 10 drehbar gelagert ist.

Eine Stirnfläche 6 der Lagerhülse 2 verläuft ebenfalls in radialer Richtung, ist jedoch in der Regel kleiner / kürzer als die Verschlusswand 5. Ein axialer Abstand zwischen der Verschlusswand 5 und der Stirnfläche 6 ist im Grenzfall exakt gleich dem Axialspiel 7 des Spannarms 10 im Gleitkanal 4. Dieses Axialspiel 7 ist über eine axiale Relativbewegung der Lagerhülse 2 zur Verschlusshülse 3 einstellbar.

Eine bedeutsame Neuerung ist also, dass während der Montage die drei in den Gleitkanal 4 eingelegten Bauteile, nämlich der Spannarm 10, das Axiallager 11 und das Axial-/Radiallager 12, durch Zusammenpressen der Lagerhülse 2 und der Verschlusshülse 3 so verbaut werden, dass kein Axialspiel 7 mehr vorhanden ist. Das Axialspiel 7 wird somit "auf Null" gesetzt. Die Lagerhülse 2, der Spannarm 10, das Axiallager 11 und das Axial- und Radiallager 12 und die Verschlusshülse 3 werden also "auf Block" gepresst. Die Lagerhülse 2 und die Verschlusshülse 3 liegen im Montagefall an dem Verbund aus den Bauteilen Spannarm 10, Axiallager 11 und Axial- und Radiallager 12 an, nämlich an der Ober- bzw. Unterseite des Verbunds. Es liegt aber im normalen Montagefall, der sich vom Grenzfall unterscheidet, wie auch im Betriebsfall zwischen der Lagerhülse 2 und der Verschlusshülse 3 ein Spalt vor. Dieser Spalt ist in Fig. 2 als Hülsenspalt 18 eingezeichnet. Theoretisch ist bei Inkaufnahme einer Doppelpassung der Hülsenspalt 18 im Montagefall auf null reduzierbar.

Erst nach der Pressung auf Block wird in einem weiteren Montageschritt die Lagerhülse 2 aktiv von der Verschlusshülse 3 so gezielt wegbewegt / entfernt, dass sich das gewünschte Axialspiel 7 exakt und vorbestimmt einstellt.

Das in Fig. 1 dargestellte Ausführungsbeispiel weist weiterhin Flanschabschnitte 8 auf, die integral mit der Lagerhülse 2 ausgestaltet sind. Die Flanschabschnitte 8 sind mit Hilfe einer Flanschöffnung 9 mit einem an den Pendelspanner 1 angrenzenden Bauteil verbindbar.

Im vorliegenden Beispiel weist der Spannarm 10 einen Abschnitt auf, der im Gleitkanal 4 angeordnet ist. Die Lagerung des Spannarms 10 erfolgt mittels eines Axiallagers 11 und eines Axial-/Radiallagers 12. Der Spannarm 10 trägt dabei eine Spannrolle 13.

Ein Teil des Spannarms 10 ist derart ausgestaltet, dass er ein Gehäuse 14 darstellt. Jenes Gehäuse 14 ist mittels einer Nietverbindung 15 mit einem Deckel 16 versehen. So sorgt der Deckel 16 für ein dichtes Abschließen des Gehäuses 14.

Fig. 2 stellt eine Detailansicht des Pressverbands dar. Hierbei ist die Verschlusshülse 3 radial innerhalb der Lagerhülse 2 angeordnet. Da das Hauptaugenmerk in Fig. 2 darauf liegt, das Axialspiel 7 des Spannarms 10 im Gleitkanal 4 zu veranschaulichen, sind die darin dargestellten Komponenten der Lagerhülse 2, der Verschlusshülse 3, des Spannarms 10 sowie der beiden Lager Axiallager 11 und Axial- und Radiallager 12 lediglich schematisch dargestellt. Durch jene Detailansicht ist das Zusammenspiel zwischen der Stirnfläche 6 und der Verschlusswand 5 erschließbar.

Bei der Einstellung der Vorrichtung wird alles bis auf die Blockhöhe "B" zusammengedrückt. Das Maß 18 ist dabei mindestens / im Grenzfall Null.

Aus der Darstellung in Fig. 2 ist deutlich ersichtlich, dass die Einstellung des Axialspiels 7 über eine axiale Relativbewegung der Lagerhülse 2 zur Verschlusshülse 3 einstellbar ist. Der vorstehend erwähnte Spalt zwischen der Verschlusswand 5 und der Stirnfläche 6 ist als Hülsenspalt 18 definiert, der in axialer Richtung nie kleiner als das Axialspiel 7 ist.

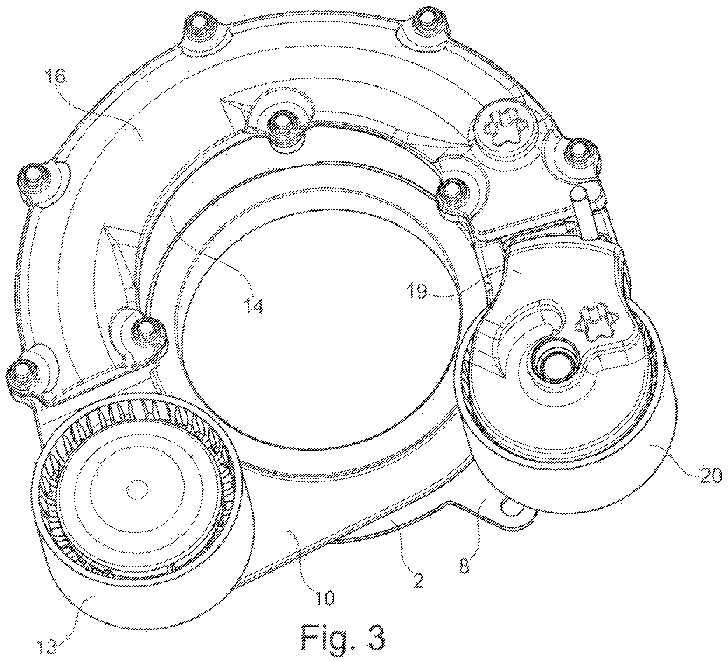

In Fig. 3 ist eine perspektivische Ansicht des Pendelspanners 1 dargestellt. Hierbei ist neben der Spannrolle 13, die aus Fig. 1 bekannt ist, auch eine auf einem zweiten Spannarm 19 montierte zweite Spannrolle 20 eingesetzt. Eine Bogenfeder 17 bringt die Riemenvorspannkraft für den Pendelspanner 1 auf.

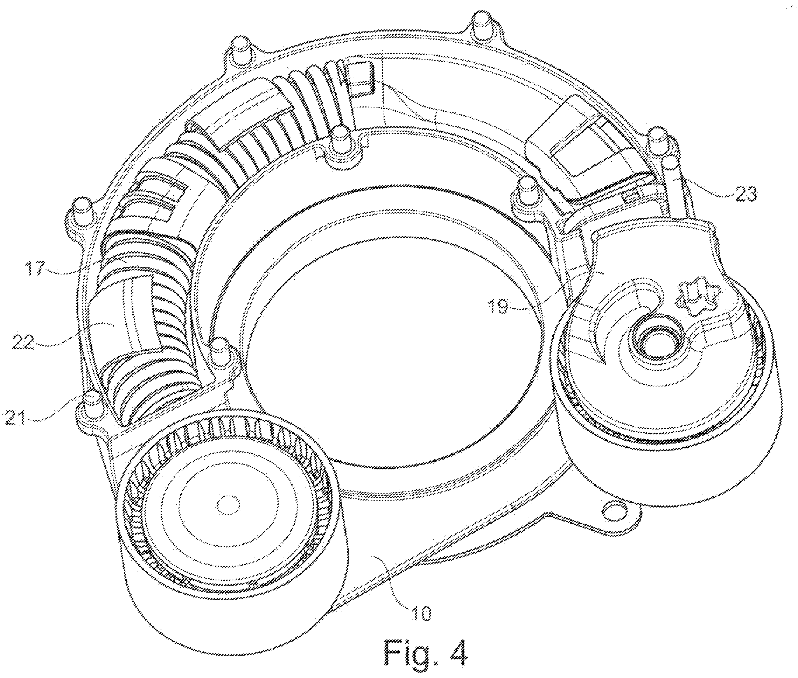

In Fig. 4 sind die Bogenfeder 17 und Verbindungszapfen 21 sichtbar, die die Nietverbindung 15 zusammen mit dem Deckel 16 ermöglichen. Für eine entsprechende Lagerung der Bogenfeder 17 sind Lagerschalen 22 ausgeformt, die L-förmig aus Polyamid gefertigt sind. Weiterhin stellt Fig. 4 einen Sicherungsstift 23 dar, der sich in axialer Richtung erstreckt.

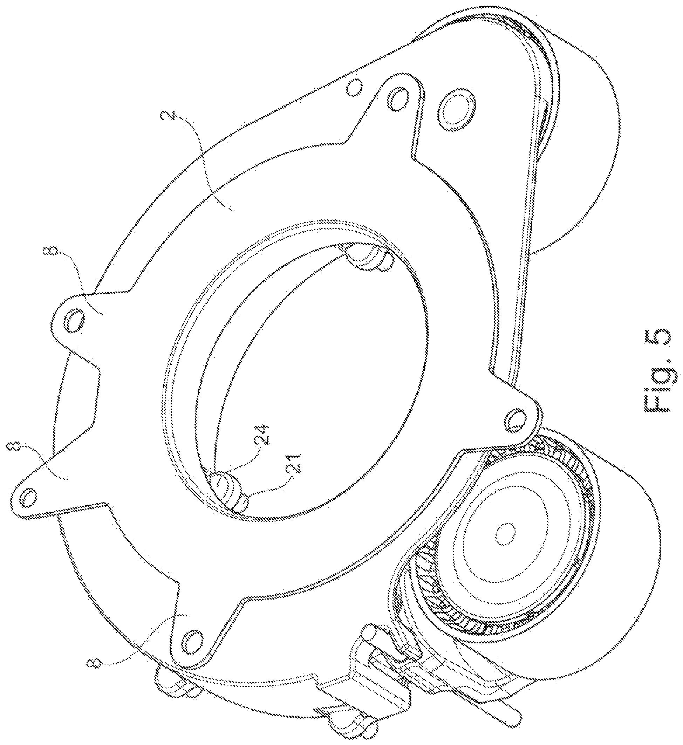

In Fig. 5 ist der Pendelspanner 1 aus einer anderen Perspektive dargestellt, so dass die Lagerhülse 2 besser sichtbar ist. Die asymmetrisch angeordneten Flanschabschnitte 8 der Lagerhülse 2 weisen eine unterschiedliche Höhe in radialer Richtung auf. Dies ist abhängig von der jeweiligen Aufnahme an dem an den Pendelspanner 1 angrenzenden Bauteil, bspw. einem Generator. Eine in Fig. 5 veranschaulichte Zapfenhalterung 24 stellt die Aufnahmeeinrichtung der Verbindungszapfen 21 dar und ragt radial nach innen.

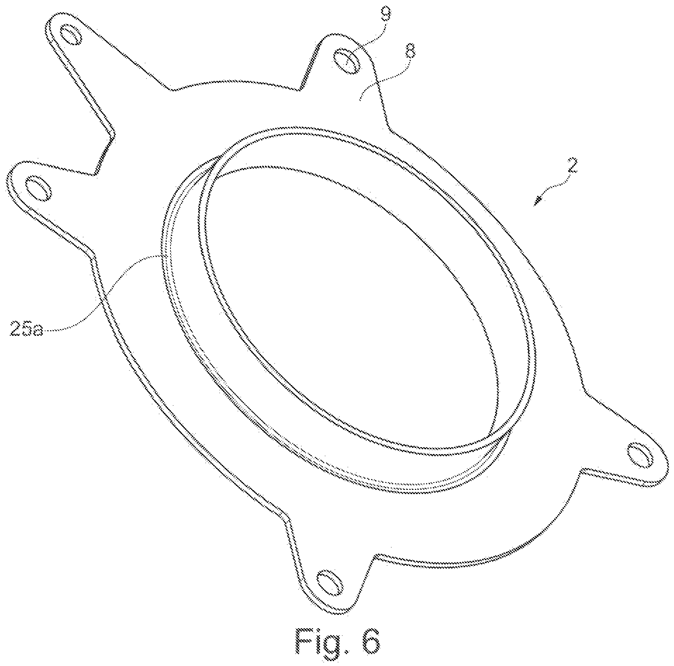

Fig. 6 zeigt eine perspektivische Ansicht der Lagerhülse 2. Neben der bereits bekannten Ausführung der Flanschabschnitte 8 mit den Flanschöffnungen 9 ist ein Freistich 25a dargestellt, der ein optimiertes Anliegen des Axial- und Radiallagers 12 an der Lagerhülse 2 ermöglicht.

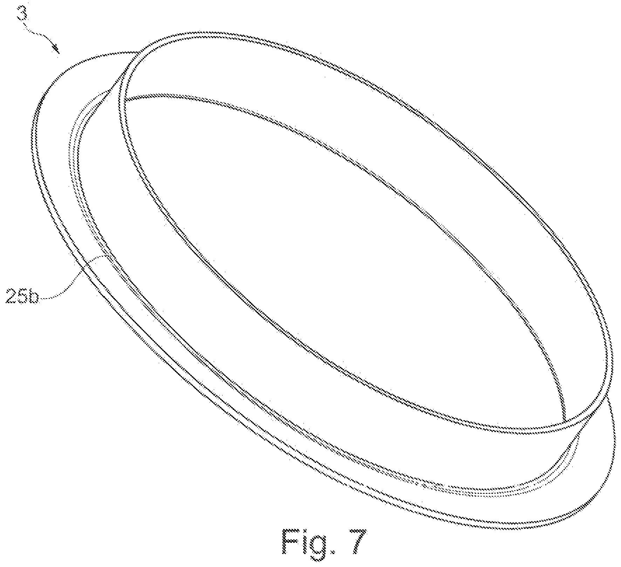

Fig. 7 stellt die Verschlusshülse 3 mit einem Verschlusshülsenfreistich 25b dar.

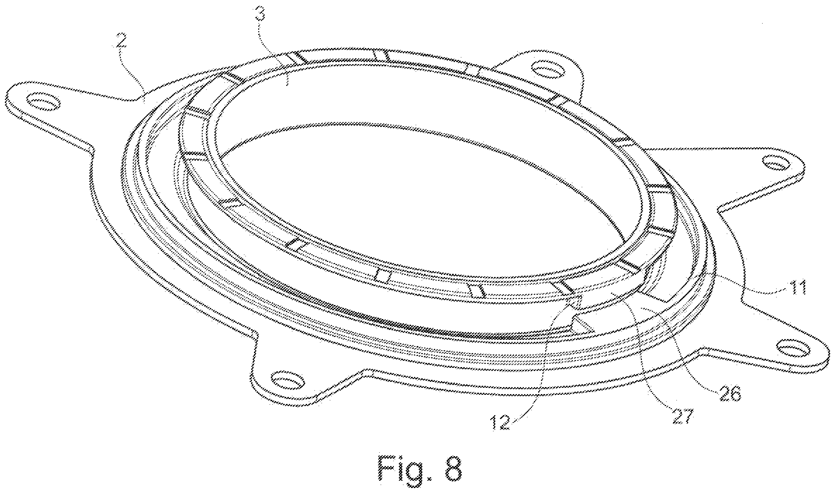

Fig. 8 zeigt einen Teilquerschnitt durch mehrere Bauteile des Pendelspanners 1. Die Verschlusshülse 3 ist radial innerhalb der Lagerhülse 2 angeordnet. Die Ansicht offenbart darüber hinaus, wie das Axiallager 11 und das Axial- und Radiallager 12 angeordnet sind. Das Axiallager 11 ist mittels einer Axiallagerfestsetzung 26 in Umfangsrichtung festgesetzt, während das Axial- und Radiallager 12 mittels einer Axial- und Radiallagerfestsetzung 27 festgesetzt ist. Die Axiallagerfestsetzung 26 und die Axial- und Radiallagerfestsetzung 27 ermöglichen es mittels eines Formschlusses, dass das Axiallager 11 und das Axial- und Radiallager 12 in Umfangsrichtung festgesetzt sind / festsetzbar sind. Es handelt sich in Fig. 8 um einen Teilquerschnitt, da die Verschlusshülse 3 abgeschnitten ist. Dies ermöglicht eine Darstellung der Stirnseite des Axial- und Radiallagers 12. Diese im dargestellten Ausführungsbeispiel mit in radialer Richtung verlaufenden Rillen versehene Stirnseite ist mit Teflon beschichtet, so dass das aus Polyamid gefertigte Axial- und Radiallager 12 ideale Lagerungseigenschaften annimmt.

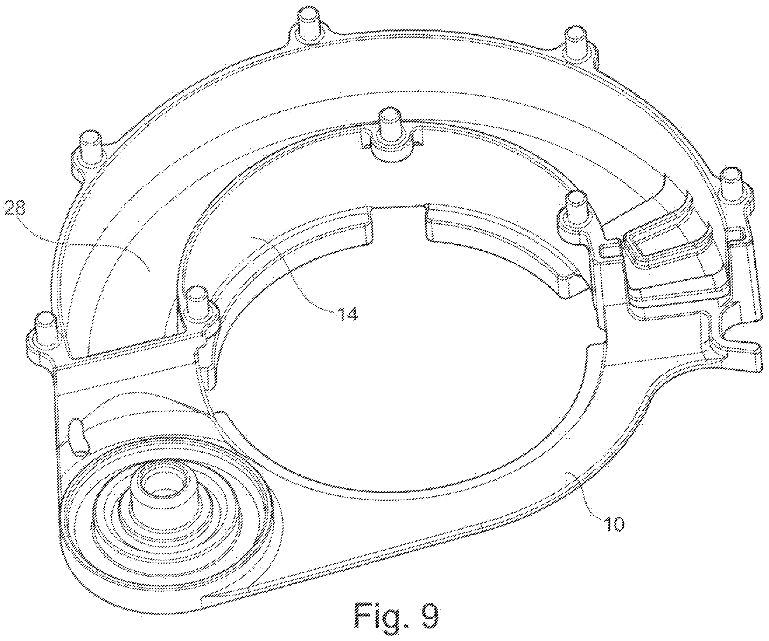

In Fig. 9 ist die Bogenfeder 17 nicht dargestellt, so dass ein Aufnahmekanal 28 deutlich sichtbar ist. Dieser ist dafür geeignet, die Bogenfeder 17 derart aufzunehmen, dass der Spannarm 10 relativ zum zweiten Spannarm 19 verdrehbar ist. Der Aufnahmekanal 28 wird vom Gehäuse 14, das Teil des Spannarms 10 ist, ausgebildet.

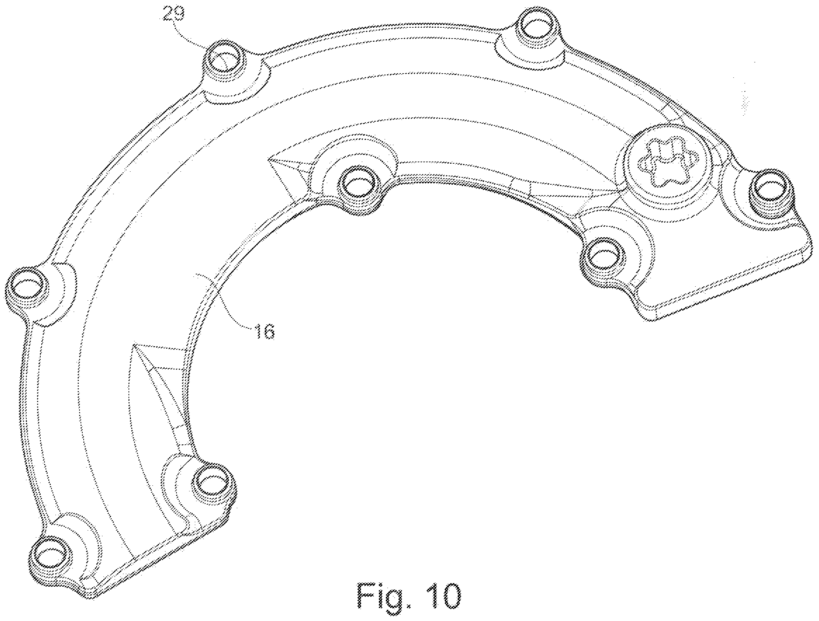

In Fig. 10 ist der Deckel 16 perspektivisch dargestellt. Deckelöffnungen 29 sind dafür ausgebildet, dass die auf den Zapfenhalterungen 24 des Gehäuses 14 gelagerten Verbindungszapfen 21 durch den Deckel 16 hindurchgreifen können, womit eine Nietverbindung 15 realisierbar ist. Das Ausführungsbeispiel weist acht Deckelöffnungen 29 auf, die für die Nietverbindung 15 geeignet sind. Der Deckel 16 ist analog zum Gehäuse 14 aus Aluminium- / Druckguss gefertigt.

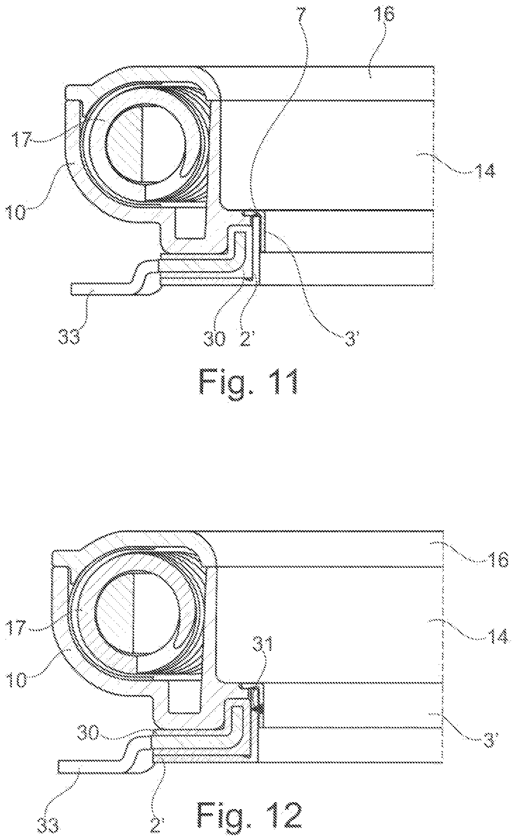

In Fig. 11 ist die Lagerung des Spannarms 10 mittels eines Gleitschuhs 30 dargestellt, der sowohl die Funktion der Axial- als auch die der Radiallagerung übernimmt. Der Gleitschuh 30 ist radial außerhalb der Lagerhülse 2' angeordnet, die radial außerhalb der Verschlusshülse 3' angeordnet ist. Weiterhin zeigt Fig. 11 die Bogenfeder 17, die im Gehäuse 14 angeordnet ist, das von dem Deckel 16 abgeschlossen ist.

Fig. 12 zeigt ein weiteres Ausführungsbeispiel. Hier ist zusätzlich ein Formschluss 31, wie eine Verstemmung, zwischen der Lagerhülse 2' und der Verschlusshülse 3' ausgebildet. Der zusätzliche Formschluss 31 erstreckt sich sowohl in axialer als auch in radialer Richtung.

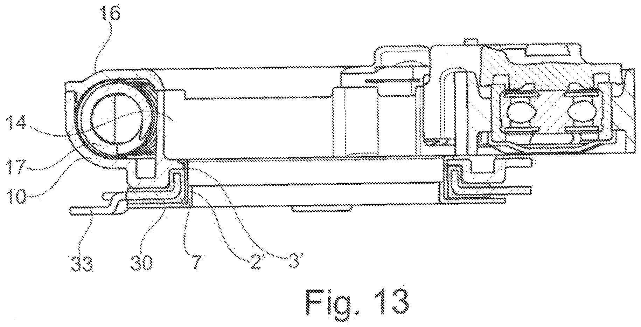

Fig. 13 zeigt ein weiteres Ausführungsbeispiel. Hier ist eine Verschlusshülse 3' radial außerhalb einer Lagerhülse 2' angeordnet. Die Lagerung des Spannarms 10 ist erneut mittels eines Gleitschuhs 30 vorgenommen. Ansonsten sind die Komponenten aus Fig. 13 aus Fig. 11 bekannt.

Der Spannarm 10 ist bei den Ausführungsbeispielen der Fig. 11, 12 und 13 auf einem Gleitlagerring 33 gelagert, der mit Flanschabschnitten 8 auf dem Generatorgehäuse (was nicht dargestellt ist) befestigt ist.

### Bezugszeichenliste

- 1: Pendelspanner
- 2: Lagerhülse
- 3: Verschlusshülse
- 4: Gleitkanal
- 5: Verschlusswand
- 6: Stirnfläche
- 7: Axialspiel
- 8: Flanschabschnitt
- 9: Flanschöffnung
- 10: Spannarm
- 11: Axiallager
- 12: Axial- und Radiallager
- 13: Spannrolle
- 14: Gehäuse
- 15: Nietverbindung
- 16: Deckel
- 17: Bogenfeder
- 18: Hülsenspalt
- 19: zweiter Spannarm
- 20: zweite Spannrolle
- 21: Verbindungszapfen
- 22: Lagerschale
- 23: Sicherungsdraht
- 24: Zapfenhalterung
- 25a: Freistich
- 25b: Verschlusshülsenfreistich
- 26: Axiallagerfestsetzung
- 27: Axial- und Radiallagerfestsetzung
- 28: Aufnahmekanal
- 29: Deckelöffnung
- 30: Gleitschuh
- 31: zusätzlicher Formschluss
- 32: Montageanlagefläche
- 33: Gleitlagerring

## Patentansprüche

1. Pendelspanner (1) für einen Nebenaggregate-Zugmitteltrieb, der zum zumindest teilweisen Umgeben einer Generatorwelle ausgelegt ist und Befestigungsbereiche an zwei zueinander drehbeweglich angeordneten Spannarmen (10, 19) für zwei Spannrollen (13, 20) aufweist, mittels derer ein Zugmittel des Nebenaggregate-Zugmitteltriebs spannbar ist, mit einer Lagerhülse (2) zum Anbringen an einem Generatorgehäuse, wobei die Lagerhülse (2) zusammen mit einer Verschlusshülse (3) einen Gleitkanal (4) ausformt, in dem einer der Spannarme (10, 19) mit Axialspiel (7) drehbar gelagert ist, **dadurch gekennzeichnet, dass** das Axialspiel (7) durch einen axialen Hülsenspalt (18) zwischen der Verschlusshülse (3) und der Lagerhülse (2) eingestellt ist, wobei der Hülsenspalt (18) größer oder gleich dem Axialspiel (7) ist.

2. Pendelspanner (1) nach Anspruch 1, **dadurch gekennzeichnet, dass** ein Pressverband zwischen der Lagerhülse (2) und der Verschlusshülse (3) über eine sich in Axialrichtung erstreckende Kontaktfläche realisiert ist und das Axialspiel (7) über eine Axialbewegung der Lagerhülse (2) und/oder der Verschlusshülse (3) variierbar / einstellbar ist.

3. Pendelspanner (1) nach einem der Ansprüche 1 oder 2, **dadurch gekennzeichnet, dass** der Pressverband derart ausgestaltet ist, dass die Verschlusshülse (3) radial innerhalb der Lagerhülse (2) angeordnet ist oder die Verschlusshülse (3) radial außerhalb der Lagerhülse (2) angeordnet ist.

4. Pendelspanner (1) nach einem der Ansprüche 1 bis 3, **dadurch gekennzeichnet, dass** innerhalb des Gleitkanals (4) eine aus zwei Lagerbauteilen zusammengesetzte Lagerung angeordnet ist, die dazu vorbereitet ist, eine relative Rotationsbewegung zwischen einem der Spannarme (10, 19) und dem Gleitkanal (4) zu ermöglichen.

5. Pendelspanner (1) nach einem der Ansprüche 1 bis 4, **dadurch gekennzeichnet, dass** das eine Lagerbauteil als ein Axiallager (11) und das andere Lagerbauteil als ein kombiniertes Axial- und Radiallager (12) ausgebildet ist.

6. Pendelspanner (1) nach einem der Ansprüche 1 bis 5, **dadurch gekennzeichnet, dass** das Axiallager (11) und/oder das Axial- und Radiallager (12) als Gleitlager ausgestaltet sind/ist.

7. Pendelspanner (1) nach einem der Ansprüche 1 bis 6, **dadurch gekennzeichnet, dass** die Lagerhülse (2) unmittelbar / direkt oder über einen separaten Verbindungsflansch mit dem Generatorgehäuse verbunden ist.

8. Pendelspanner (1) nach einem der Ansprüche 1 bis 7, **dadurch gekennzeichnet, dass** die Lagerhülse (2) mehrere asymmetrisch angeordnete Befestigungsabschnitte / Flanschabschnitte (8) aufweist, die dafür geeignet / vorbereitet sind, den Pendelspanner (1) mit einem Generator zu verbinden.

9. Riemenantrieb eines Kraftfahrzeugs, mit einem Generator, der ein Generatorgehäuse aufweist, innerhalb dessen eine Generatorwelle drehbar angeordnet ist, sowie mit einem mit der Generatorwelle Drehmoment übertragend verbundenen Riemen, wobei der Riemenantrieb einen Pendelspanner (1) nach einem der vorigen Ansprüche aufweist, der in Kontakt mit dem Riemen steht.

## Claims

1. A pendulum tensioner (1) for an ancillary unit traction mechanism drive, which is configured to at least partially surround a generator shaft and has securing regions on two tensioning arms (10, 19) arranged rotationally with respect to one another for two tensioning rollers (13, 20), by means of which a traction mechanism of the ancillary unit traction mechanism drive can be tensioned, having a bearing sleeve (2) for attaching to a generator housing, wherein the bearing sleeve (2) together with a locking sleeve (3) forms a sliding channel (4), in which one of the tensioning arms (10, 19) is rotatably mounted with axial play (7), **characterised in that** the axial play (7) is set by an axial sleeve gap (18) between the locking sleeve (3) and the bearing sleeve (2), wherein the sleeve gap (18) is greater than or equal to the axial play (7).

2. The pendulum tensioner (1) according to claim 1, **characterised in that** a press fit is realised between the bearing sleeve (2) and the locking sleeve (3) via a contact surface extending in the axial direction and the axial play (7) can be varied/set via an axial movement of the bearing sleeve (2) and/or the locking sleeve (3).

3. The pendulum tensioner (1) according to any one of claims 1 or 2, **characterised in that** the press fit is configured such that the locking sleeve (3) is arranged radially inside the bearing sleeve (2) or the locking sleeve (3) is arranged radially outside the bearing sleeve (2).

4. The pendulum tensioner (1) according to any one of claims 1 to 3, **characterised in that** a bearing consisting of two bearing components is arranged within the sliding channel (4) and is prepared to facilitate a relative rotational movement between one of the tensioning arms (10, 19) and the sliding channel (4).

5. The pendulum tensioner (1) according to any one of claims 1 to 4, **characterised in that** the one bearing component is configured as an axial bearing (11) and the other bearing component is configured as a combined axial and radial bearing (12).

6. The pendulum tensioner (1) according to any one of claims 1 to 5, **characterised in that** the axial bearing (11) and/or the axial and radial bearing (12) is/are configured as slide bearings.

7. The pendulum tensioner (1) according to any one of claims 1 to 6, **characterised in that** the bearing sleeve (2) is connected to the generator housing directly or via a separate connecting flange.

8. The pendulum tensioner (1) according to any one of claims 1 to 7, **characterised in that** the bearing sleeve (2) has a plurality of asymmetrically arranged fastening portions/flange portions (8) which are suitable/prepared to connect the pendulum tensioner (1) to a generator.

9. A belt drive of a motor vehicle having a generator, which comprises a generator housing, within which a generator shaft is rotatably arranged, and having a belt connected to the generator shaft in a torque-transmitting manner, wherein the belt drive comprises a pendulum tensioner (1) according to any one of the preceding claims, which is in contact with the belt.

## Revendications

1. Tendeur oscillant (1) pour un mécanisme à moyen de traction de groupe auxiliaire, conçu pour entourer au moins partiellement un arbre de générateur et présente des zones de fixation sur deux bras tendeurs (10, 19) agencés de manière mobile en rotation l'un par rapport à l'autre pour deux galets tendeurs (13, 20) qui permettent de tendre un moyen de traction du mécanisme à moyen de traction de groupe auxiliaire et qui comporte une douille de palier (2) pour son montage sur un carter de générateur, la douille de palier (2) et une douille de fermeture (3) formant un canal de coulissement (4) dans lequel l'un des bras tendeurs (10, 19) est monté de manière à pouvoir tourner avec un jeu axial (7), **caractérisé en ce que** le jeu axial (7) est ajusté par l'écart axial (18) entre la douille de fermeture (3) et la douille de palier (2), l'écart entre les douilles (18) étant supérieur ou égal au jeu axial (7).

2. Tendeur oscillant (1) selon la revendication 1, **caractérisé en ce qu'**un ajustement serré est réalisé entre la douille de palier (2) et la douille de fermeture (3) via une surface de contact s'étendant axialement et le jeu axial (7) est variable/réglable via un mouvement axial de la douille de palier (2) et/ou de la douille de fermeture (3).

3. Tendeur oscillant (1) selon l'une quelconque des revendications 1 ou 2, **caractérisé en ce que** l'ajustement serré est conçu pour que la douille de fermeture (3) soit disposée radialement à l'intérieur de la douille de palier (2) ou **en ce que** la douille de fermeture (3) est agencée radialement à l'extérieur de la douille de palier (2).

4. Tendeur oscillant (1) selon l'une quelconque des revendications 1 à 3, **caractérisé en ce que,** dans le canal de coulissement (4), est agencé un palier constitué de deux composants de palier, qui est préparé de manière à permettre un mouvement de rotation relatif entre l'un des bras tendeurs (10, 19) et le canal de coulissement (4).

5. Tendeur oscillant (1) selon l'une quelconque des revendications 1 à 4, **caractérisé en ce que** l'un des composants de palier est conçu en tant que palier axial (11) et l'autre composant de palier en tant que palier axial et radial combiné (12).

6. Tendeur oscillant (1) selon l'une quelconque des revendications 1 à 5, **caractérisé en ce que** le palier axial (11) et/ou le palier axial et radial (12) sont conçus sous la forme de paliers lisses.

7. Tendeur oscillant (1) selon l'une quelconque des revendications 1 à 6, **caractérisé en ce que** la douille de palier (2) est raccordée directement ou par l'intermédiaire d'une bride de raccordement séparée au carter du générateur.

8. Tendeur oscillant (1) selon l'une quelconque des revendications 1 à 7, **caractérisé en ce que** la douille de palier (2) présente une pluralité de portions de fixation/portions de bride (8) agencées de manière asymétrique qui sont adaptées/préparées pour relier le tendeur oscillant (1) à un générateur.

9. Entraînement par courroie d'un véhicule automobile comportant un générateur qui présente un carter de générateur dans lequel un arbre de générateur est monté de manière rotative et une courroie reliée à l'arbre de générateur et transmettant le couple, l'entraînement par courroie comprenant un tendeur oscillant (1) selon l'une quelconque des revendications précédentes, qui est en contact avec la courroie.
